Europäisches Patentamt

European Patent Office

Office européen des brevets

(11) Publication number: **0 058 912**
**B1**

## EUROPEAN PATENT SPECIFICATION

(45) Date of publication of patent specification: **22.05.85**

(21) Application number: **82101120.2**

(22) Date of filing: **16.02.82**

(51) Int. Cl.⁴: **A 01 D 87/00, E 02 F 3/34**

(54) Front end loader.

(30) Priority: **19.02.81 SE 8101125**

(43) Date of publication of application:
**01.09.82 Bulletin 82/35**

(45) Publication of the grant of the patent:
**22.05.85 Bulletin 85/21**

(84) Designated Contracting States:
**AT BE CH DE FR GB IT LI LU NL SE**

(56) References cited:
**FR-A-1 482 150**
**GB-A-2 051 002**
**US-A-2 449 160**

(73) Proprietor: **Melin, Karl Harvid**
**Poppelvägen 1**
**S-681 00 Kristinehamn (SE)**

(72) Inventor: **Melin, Karl Harvid**
**Poppelvägen 1**
**S-681 00 Kristinehamn (SE)**

(74) Representative: **Hynell, Magnus**
**Hynell Patenttjänst AB Box 236**
**S-683 02 Hagfors (SE)**

Courier Press, Leamington Spa, England.

### Description

The invention relates to a front end loader intended to be mounted on tractors and similar vehicles and intended to be used e.g. as a loading device within agriculture. The front end loader can be equipped with different types of special devices which can be used e.g. for the handling of pallets, round or cylindrical bales and large sacks. The invention relates more specifically to a front end loader with arms with variable length, which permit an adaptation to different kinds of applications.

Front end loaders of the mentioned type are earlier well known and have been used to a large extent within agriculture. An increase of the length of the arms of earlier known front end loaders implies, however, that the load is moved forward in relation to the tractor, when the arms are at their lowest position. The loading device is thus exposed to huge strain when the tractor is driven carrying a load with elongated arms at their lowest position. In order to reduce the strain when using hitherto known front end loaders, it will be necessary to reduce the maximum load. The minimum length of the arms of hitherto known designs of front end loaders is furthermore limited by the space available when the arms are at their lowest position when the tractor is moved. The arms of front end loaders according to present art can be elongated in order to reach higher. The load will thus be placed far away in front of the tractor when the arms are in their driving position, i.e. their lowest position. This is a considerable disadvantage with front end loaders of known designs, specially when the tractor is driven on an uneven surface at relatively high speed, due to the fact that dynamic strain on the front end loader and on the tractor is considerable under such conditions. When using front end loaders according to present art, it is necessary to choose the length of the arms either according to the height to be reached or according to the load required. In the first case the length of the arms must be considerable and if the front end loader is designed in such a way that the arms can be elongated the maximum length of arms is chosen. This implies however the disadvantage that the loading capacity is limited and that the front end loader in its driving position i.e. in its lowest position, has the load placed far away in front of the tractor which implies huge dynamic strain on the tractor and on the front end loader when driving on an irregular surface. If the length of the arms is chosen for a maximum loading capacity, the shortest arm length should be chosen. This implies, however, that the height that can be reached will be limited.

Vehicle-mounted front end loaders are also known in the art, e.g. through GB—A—2057002 and US—A—2 449 160, the arms of which can be elongated or shortened. Each arm comprises a first and a second straight member, the second member being telescopically movable in the first member, said arms being simultaneously pivotable around a pivot axis located at the rear end of the arms. These devices, however, have not involved any technical progress.

It is an object of the invention to provide a front end loader with which the above mentioned disadvantages and limitations are eliminated. The front end loader according to the present invention is characterized in that said second member includes a front part which is bent at an obtuse angle to a rear part, that said first member in the front part thereof is provided with means for the connection of a piston of an hydraulic cylinder for lifting and lowering of the arm, and that a link rod is connected between an attachment point on a support on the tractor and a fastening device on said straight rear part of said second member.

Further characteristics and advantages with the present invention will become apparent from the following description of a preferred embodiment and from the following claims.

In the following description of a preferred embodiment reference will be made to the following figures.

Fig. 1 shows a side view of the front end loader,

Fig. 2 is a side view, which shows how the front end part of the arms is connected to the rear end part of the arm, and

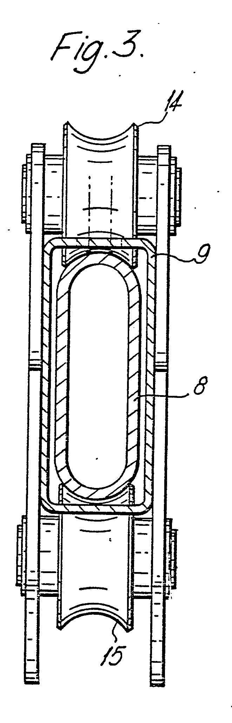

Fig. 3 is a cross-section A—A in Fig. 2.

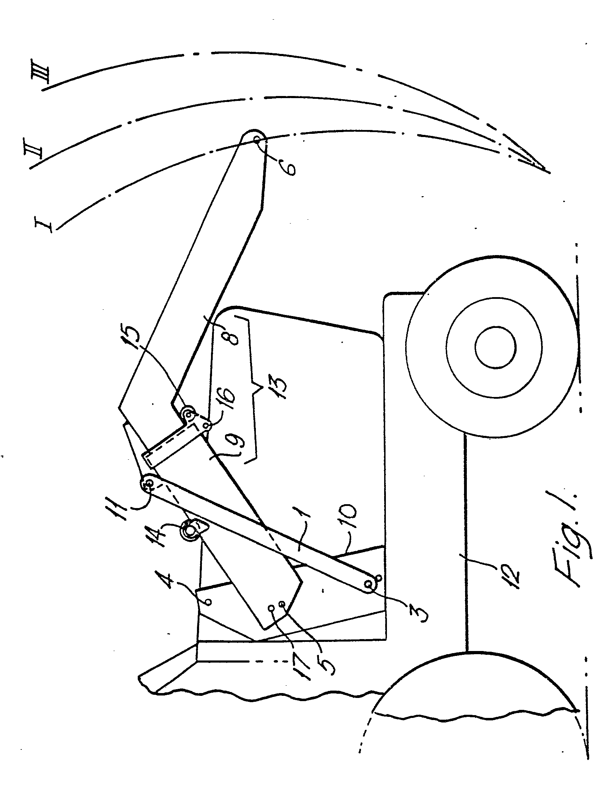

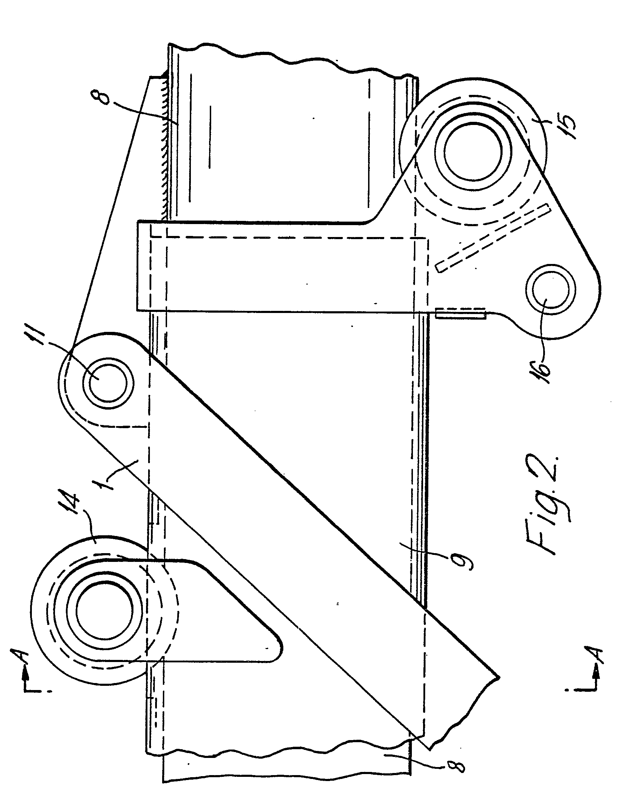

The arm belonging to the front end loader is bent in angle and has been designated with 13 on Fig. 1. The arm 13 can be elongated and consists thus of two parts, namely a rear end part 9 and a front end part 8, which is bent in angle. The rear end part 9 of the arm has a mainly tubular form with rectangular section. The rear end part 9 of the arm surrounds and encloses the rear part of the front end part 8 of the arm, which is bent in angle. Fig. 2 shows how the front end part 8 of the arm is connected to the rear end part 9 of the arm. The rear end part 9 of the arm is equipped with a rear support roller 14 and a front end support roller 15. The support rollers 14, 15 take up the forces required to carry the weight of the front end part 8 of the arm and the load. The support rollers 14, 15 serve the purpose of reducing friction to a minimum when the front end part 8 of the arm is moved inwards and outwards in the rear end part 9 of the arm 13. On Fig. 2 an ear 16 is shown, which is intended for the connection of the front end part of a piston belonging to a hydraulic cylinder. The arm 13 is lifted and lowered by means of the above mentioned hydraulic cylinder, the arm pivoting about an axis 5 which is perpendicular to the planes defined by the straight parts of the arms 13.

On the front end part 8 of the arm there is a fastening device 11, which is used to attach one of the ends of a link rod 1. The other end of the link rod 1 can be attached either to one of two attachment points 3, 4, which are located on a support 10 or to an attachment point 17 on the rear end part 9 of the arm 13, which is bent in angle.

When the rear end part of the link rod 1 is attached to the attachment point 17 on the straight part 9 of the arm 13 there is no displacement of the front end part 8 of the arm 13 in relation to the rear end part 9 when the arm 13 is lifted or lowered.

The curves I, II and III on Fig. 1 show how a fore end attachment point 6 on the front end part 8 of the arm is displaced when the arm 13 is lifted or lowered. The attachment point 6 is used to attach special devices for handling of loads such as forks for handling of pallets.

When the rear end of the link rod 1 is attached to the attachment point 17 there is no relative movement between the front end part 8 of the arm 13 and the rear end part 9 of the same arm. The attachment point 6 will then move according to the curve which has been designated II when the arm 13 is lifted or lowered.

The attachment point 6 will be in such a position that the load will be placed as near to the tractor as possible, when the arm 13 is in its lowest position. When driving the tractor, the arm will generally be placed in its lowest position. The dynamic strain in connection with the movement of the tractor will be reduced to a minimum, if the load is placed as much rearwards as possible.

In those cases when maximum lifing height should be achieved, the rear end of the link rod 1 is attached to the attachment point 4.

The arm 13 will then be elongated when the arm 13 is moved upwards and the attachment point 6 will describe a curve corresponding to the one designated with III on Fig. 1, when the arm is lowered or lifted.

If the rear end attachment point of the link rod 1 is moved to the attachment point 3, the arm 13 will be shortened when the arm 13 is lifted. The attachment point 6 will then describe a curve I in connection with an upwards or downwards movement of the arm 13.

The choice of attachment points for the rear end of the link rod 1 thus permits a choice among different functional relations between the height position of the arm 13 and its length.

If further attachment points are provided for the attachment of the rear end of the link rod 1, there will be further possibilities of ajustment to other functional relations between the height position of the arm 13 and its length.

The same functional relation which has been obtained by means of the link rod 1 can also be obtained if the relative movement between the front end part 8 of the arm 13 and its rear end part 9 is achieved by means of a hydraulic cylinder which is controlled in some adequate way.

## Claims

1. Front end loader adapted to be mounted on tractors comprising a pair of lifting arms (13), said arms being simultaneously pivotable around a pivoting axis located at the rear end of the arms, each of said arms comprising a first and a second member, said first member (9) being straight and said second member (8) including a rear part which is also straight, said first member (9) and said rear part of said second member (8) being telescopically movable relative to each other, characterized in that said second member (8) also includes a front part which is bent at an obtuse angle to said rear part, that said first member in the front part thereof is provided with means (16) for the connection of a piston of an hydraulic cylinder for lifting and lowering of the arm, and that a link rod (1) is connected between an attachment point (3, 4) on a support (10) on the tractor and a fastening device (11) on said straight rear part of said second member.

2. Front end loader according to claim 1, characterized in that said attachment point (4) is situated above the pivoting axis around which said first member turns when the arms are lifted and lowered.

## Revendications

1. Chargeur frontal destiné à être monté sur des tracteurs, comportant une paire de bras de levage (13), les dits bras étant simultanément pivotables autour d'un axe situé à l'extrémité arrière des bras, chacun des dits bras comprenant un premier et un second membre, le dit premier membre (9) étant rectiligne et le dit second membre (8) comportant une partie arrière qui est également reciligne, le dit premier membre (9) et la dite partie arrière du dit second membre (8) étant mobiles de façon télescopique l'un par rapport à l'autre, caractérisé en ce que le dit second membre (8) comporte également une partie avant qui est coudée à un angle obtus par rapport à la dite partie arrière, en ce que le dit premier membre est, dans sa partie avant, pourvu de moyens (16) pour attacher un piston d'un cylindre hydraulique destiné à relever et à abaisser le bras, et en ce qu'une bielle (1) est montée entre un point d'attache (3, 4) sur un support (10) monté le tracteur et un système de fixation (11) situé sur la dite partie arrière rectiligne du dit second membre.

2. Chargeur frontal suivant la revendication 1, caractérisé en ce que le dit point d'attache (4) est situé au-dessus de l'axe autour duquel le dit premier membre tourne lorsque les bras sont relevés et abaissés.

## Patentansprüche

1. Frontlader zur Montage auf Traktoren, der zwei Hebearme (13) umfaßt, wobei die genannten Arme um eine Drehachse am hinteren Ende der Arme gleichzeitig drehbar sind, jeder der genannten Arme einen ersten und einen zweiten Träger umfaßt, wobei der genannte, erste Träger (9) ein gerader Träger ist und der genannte, zweite Träger (8) ein hinteres Teil, das ebenfalls gerade ausgeführt ist, umfaßt, der genannte, erste Träger (9) und das genannte, hintere Teil des genannten, zweiten Trägers (8) relativ zueinander teleskopartig bewegbar sind, dadurch gekennzeichnet, daß der genannte, zweite Träger (8) ebenfalls ein vorderes Teil umfaßt, das stumpfwinklig zum genannten, hinteren Tiel verläuft, daß der genannte, erste Träger in seinem vorderen Teil mit Vorrichtungen (16) für die Befestigung eines Kolbens eines Hydraulikzylinders zum Anheben und Absenken des Arms versehen ist, und daß eine Gelenkstange (1) zwischen einem Befestigungspunkt (3, 4) an einer Halterung (10) am Traktor und einer Befestigungsvorrichtung (11) am genannten, geraden, hinteren Teil des genannten, zweiten Trägers befestigt ist.

2. Frontlader gemäß Anspruch 1, dadurch gekennzeichnet, daß der genannte Befestigungspunkt (4) oberhalb der Drehachse angeordnet ist, um die sich der genannte, erste Träger bewegt, wenn die Arme angehoben oder abgesenkt werden.

Fig. 1.

0 058 912

Fig. 2.

0 058 912

# Fig.3.